# FASCICULE DE BREVET EUROPEEN

(11) **EP 2 522 825 B1**
(45) Date de publication et mention de la délivrance du brevet: **29.10.2014**
(21) Numéro de dépôt: 12165554.2
(22) Date de dépôt: 25.04.2012
(51) Int. Cl.: F01N 13/14, B60R 13/08

(54) **Ecran de protection thermique et acoustique pour une ligne d`échappement de véhicule automobile**
Wärme- und Schallschutzschirm für eine Abgasleitung eines Kraftfahrzeugs
Thermal and acoustic shield for a motor vehicle exhaust line

(30) Priorité: 12.05.2011 FR 1154103
(43) Date de publication de la demande: 14.11.2012
(73) Titulaire: CENTRE D'ETUDE ET DE RECHERCHE POUR L'AUTOMOBILE (CERA), 51100 Reims (FR)
(72) Inventeur: Choquart, François, 51100 Reims (FR); Waxin, Laurent, 02130 Dravegny (FR)
(74) Mandataire: Sayettat, Julien Christian

(56) Documents cités:
- EP-A2- 1 213 187
- WO-A2-2004/045843

## Description

L'invention concerne un écran de protection thermique et acoustique pour une ligne d'échappement de véhicule automobile.

Il est connu de réaliser un écran de protection thermique et acoustique pour une ligne d'échappement de véhicule automobile, ledit écran présentant une partie sensiblement rectiligne en forme générale de gouttière renversée présentant deux flancs latéraux délimités chacun par une bordure basse sensiblement rectiligne respective, ledit écran comprenant, associées en superposition, une feuille interne de réflexion thermique en aluminium et une couche poreuse d'absorption acoustique.

Un tel écran est monté sur le véhicule de sorte que la feuille d'aluminium soit en regard de la ligne d'échappement qui est logée à l'intérieur de la partie sensiblement rectiligne.

Lorsque l'écran est monté sur le véhicule, il vient généralement prendre appui par tout ou partie de sa surface extérieure contre une tôle de dessous de caisse.

Un tel écran est connu du WO 2004/045843 A.

Lorsque le véhicule est soumis à un environnement aquatique, par exemple en cas de traversée d'un gué, il existe un risque que de l'eau s'infiltre entre la tôle de dessous de caisse et la couche poreuse et pénètre au sein de ladite couche poreuse, ce qui peut conduire notamment à une dégradation de ses propriétés d'absorption acoustique.

L'invention a pour but de pallier cet inconvénient.

A cet effet, l'invention propose un écran de protection thermique et acoustique pour une ligne d'échappement de véhicule automobile, ledit écran présentant une partie sensiblement rectiligne en forme générale de gouttière renversée présentant deux flancs latéraux délimités chacun par une bordure basse sensiblement rectiligne respective, ledit écran comprenant, associées en superposition, une feuille interne de réflexion thermique en aluminium et une couche poreuse d'absorption acoustique, ledit écran comprenant en outre deux bandes latérales externes de protection de ladite couche poreuse contre l'eau, chacune desdites bandes recouvrant respectivement chacun desdits flancs depuis sa bordure jusqu'à une hauteur prédéterminée, une zone médiane de ladite couche poreuse étant non recouverte par lesdites bandes.

Lorsque l'on parle d'une partie sensiblement rectiligne en forme de gouttière renversée, on se réfère à l'écran une fois monté dans le véhicule, de même que lorsque on se référera dans la description à des termes de repérage dans l'espace (transversal, bas, hauteur, haut, avant, longueur, dessus,...).

Les termes « interne » et « externe », quant à eux, sont considérés par rapport au volume interne défini par la partie sensiblement rectiligne en forme de gouttière.

Dans une telle réalisation, l'eau est empêchée de pénétrer dans la couche poreuse dans la mesure où elle ne dépasse pas la hauteur prédéterminée.

La présence de la zone médiane non recouverte par les bandes de protection permet à la couche poreuse d'assurer sa fonction d'absorption acoustique.

La feuille de réflexion thermique permet, quant à elle, de réfléchir le rayonnement thermique issu de la ligne d'échappement.

D'autres particularités et avantages de l'invention apparaîtront dans la description qui suit, faite en référence aux figures jointes dans lesquelles :
- la figure 1 est une représentation schématique en coupe transversale d'un écran selon une première réalisation,
- la figure 2 est une représentation schématique en coupe transversale d'un écran selon une deuxième réalisation,
- la figure 3 est une représentation schématique en coupe transversale d'un écran selon une troisième réalisation,
- la figure 4 est une représentation en perspective d'un écran selon un mode de réalisation particulier.

En référence aux figures, on décrit à présent un écran 1 de protection thermique et acoustique pour une ligne d'échappement de véhicule automobile, ledit écran présentant une partie 13 sensiblement rectiligne en forme générale de gouttière renversée présentant deux flancs 2 latéraux délimités chacun par une bordure 3 basse sensiblement rectiligne respective, ledit écran comprenant, associées en superposition, une feuille interne 4 de réflexion thermique en aluminium et une couche poreuse 5 d'absorption acoustique, ledit écran comprenant en outre deux bandes 6 latérales externes de protection de ladite couche poreuse contre l'eau, chacune desdites bandes recouvrant respectivement chacun desdits flancs depuis sa bordure 3 jusqu'à une hauteur 7 prédéterminée, une zone médiane 8 de ladite couche poreuse étant non recouverte par lesdites bandes.

Selon une réalisation, la hauteur 7 prédéterminée présente une valeur minimum de 50 mm, prenant par exemple une valeur de l'ordre de 100 mm, ce qui exclut des réalisations dans lesquelles sont présentes des bandes recouvrant les flancs 2 sur une faible hauteur, par exemple de l'ordre de quelques millimètres, lesdites bandes étant notamment présentes en vue d'une simple finition des bordures 3.

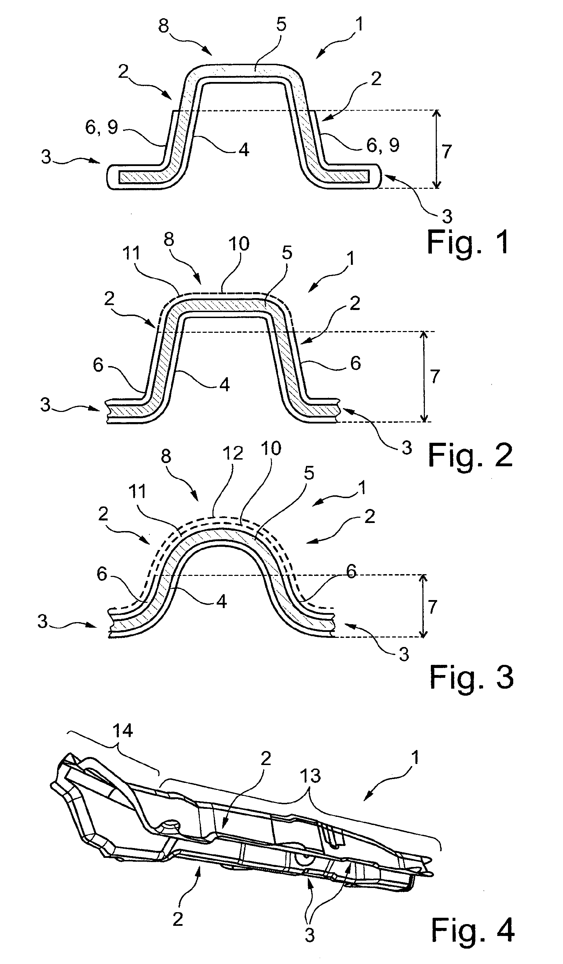

Selon la réalisation représentée en figure 4, la partie 13 sensiblement rectiligne en forme de gouttière s'étend sur quasiment toute la longueur de l'écran à l'exception de sa partie avant 14 qui remonte vers le haut.

Selon une réalisation, la feuille interne 4 présente épaisseur comprise entre 70 et 150 microns, et notamment entre 100 et 130 microns.

Avec une feuille 4 d'une telle finesse, on peut prévoir une couche poreuse 5 présentant une rigidité suffisante pour rendre l'écran 1 autoportant.

La couche poreuse 5 peut notamment être à base de feutre verre avec liant phénolique, de mousse polyuréthanne ou de mousse mélamine.

Selon la réalisation de la figure 1, les bandes 6 sont issues de la feuille interne 4, lesdites bandes étant formées par deux saillies 9 latérales de ladite feuille qui sont repliées contre la couche poreuse 5.

En variante non représentée, c'est le complexe comprenant la feuille interne 4 et la couche poreuse 5 qui est replié vers le haut pour former les bandes 6 d'étanchéité.

Selon la réalisation de la figure 2, l'écran 1 comprend une feuille externe 10 étanche associée contre la couche poreuse 5, ladite feuille étant couverte de micro perforations 11 au dessus de la hauteur 7 prédéterminée, les zones non perforées de ladite feuille formant bandes 6 de protection.

Typiquement, on pourra prévoir entre 18 et 45 perforations / cm², le diamètre de chaque perforation 11 pouvant être compris entre 0,17 et 0,4 mm, et notamment entre 0,17 et 0,2 mm.

L'intérêt d'une telle micro perforation est de limiter la pénétration d'eau dans la couche poreuse 5 en cas d'immersion momentanée de la zone médiane 8, par exemple au cours de la traversée d'un gué profond par le véhicule.

La zone médiane 8 est disposée en regard des micro perforations 11, ces dernières permettant aux ondes sonores de pénétrer dans la couche poreuse 5 au niveau de ladite zone et d'y être absorbées.

Selon une réalisation, la feuille externe 10 est un film de matériau plastique.

Selon une autre réalisation, la feuille externe 10 est en aluminium, ce qui permet une amélioration des performances de protection thermique de l'écran 1 qui est alors pourvu de deux feuilles d'aluminium 4,10.

La feuille 10 d'aluminium peut présenter typiquement une épaisseur comprise entre 100 et 130 microns.

Selon la réalisation représentées en figure 3, l'écran 1 comprend en outre une couche de protection 12 externe poreuse, ladite couche étant notamment à base de non tissé.

Une telle couche de protection 12 peut notamment être traitée pour présenter des propriétés hydro-oléophobe et anti feu.

La porosité de la couche de protection 12 permet de ne pas faire obstacle à la pénétration des ondes sonores dans la couche d'absorption poreuse 5.

Une telle réalisation permet notamment, dans le cas d'une feuille externe 10 à base de film de matériau plastique, d'utiliser un film de moindre qualité, et donc moins coûteux, puisqu'il est protégé par la couche de protection 12 réalisée notamment à base d'un matériau peu coûteux.

Une telle couche de protection 12 pourrait être également prévue sur les réalisations des figures 1 et 2.

## Revendications

1. Ecran (1) de protection thermique et acoustique pour une ligne d'échappement de véhicule automobile, ledit écran présentant une partie (13) sensiblement rectiligne en forme générale de gouttière renversée présentant deux flancs (2) latéraux délimités chacun par une bordure (3) basse sensiblement rectiligne respective, ledit écran comprenant, associées en superposition, une feuille interne (4) de réflexion thermique en aluminium et une couche poreuse (5) d'absorption acoustique, ledit écran étant **caractérisé en ce qu'**il comprend en outre deux bandes (6) latérales externes de protection de ladite couche poreuse contre l'eau, chacune desdites bandes recouvrant respectivement chacun desdits flancs depuis sa bordure (3) jusqu'à une hauteur (7) prédéterminée, une zone médiane (8) de ladite couche poreuse étant non recouverte par lesdites bandes.

2. Ecran selon la revendication 1, **caractérisé en ce que** la hauteur (7) présente une valeur minimum de 50 mm.

3. Ecran selon la revendication 1 ou 2, **caractérisé en ce que** les bandes (6) sont issues de la feuille interne (4), lesdites bandes étant formées par deux saillie (9) latérales de ladite feuille qui sont repliées contre la couche poreuse (5).

4. Ecran selon la revendication 1 ou 2, **caractérisé en ce que** le complexe comprenant la feuille interne (4) et la couche poreuse (5) est replié vers le haut pour former les bandes (6) d'étanchéité.

5. Ecran selon la revendication 1 ou 2, **caractérisé en ce qu'**il comprend une feuille externe (10) étanche associée contre la couche poreuse (5), ladite feuille étant couverte de micro perforations (11) au dessus de la hauteur (7) prédéterminée, les zones non perforées de ladite feuille formant bandes (6) de protection.

6. Ecran selon la revendication 5, **caractérisé en ce que** la feuille externe (10) est un film de matériau plastique.

7. Ecran selon la revendication 5, **caractérisé en ce que** la feuille externe (10) est en aluminium.

8. Ecran selon l'une quelconque des revendications 1 à 7, **caractérisé en ce qu'**il comprend en outre une couche de protection (12) externe poreuse.

## Patentansprüche

1. Wärme- und Schallschutzschirm (1) für einen Abgastrakt eines Kraftfahrzeugs, wobei der Schirm einen im Wesentlichen geradlinigen Teil (13) in der allgemeinen Form einer umgekehrten Rinne aufweist, die zwei seitliche Flanken (2) aufweist, die jeweils durch einen im Wesentlichen geradlinigen unteren Rand (3) begrenzt sind, wobei der Schirm, übereinander gelagert angeordnet, ein inneres Blatt (4) zur thermischen Reflexion aus Aluminium und eine poröse Schicht (5) zur akustischen Absorption umfasst, wobei der Schirm **dadurch gekennzeichnet ist, dass** er außerdem zwei äußere seitliche Bänder (6) zum Schutz der porösen Schicht gegen Wasser umfasst, wobei jedes der Bänder jeweils jede der Flanken von ihrem Rand (3) bis zu einer vorbestimmten Höhe (7) bedeckt, wobei ein mittlerer Bereich (8) der porösen Schicht nicht von den Bändern bedeckt ist.

2. Schirm nach Anspruch 1, **dadurch gekennzeichnet, dass** die Höhe (7) einen Wert von mindestens 50 mm aufweist.

3. Schirm nach Anspruch 1 oder 2, **dadurch gekennzeichnet, dass** die Bänder (6) aus dem inneren Blatt (4) stammen, wobei die Bänder durch zwei seitliche Vorsprünge (9) des Blattes gebildet sind, die gegen die poröse Schicht (5) gefaltet sind.

4. Schirm nach Anspruch 1 oder 2, **dadurch gekennzeichnet, dass** die Einheit, die das innere Blatt (4) und die poröse Schicht (5) umfasst, nach oben gefaltet ist, um die Dichtigkeitsbänder (6) zu bilden.

5. Schirm nach Anspruch 1 oder 2, **dadurch gekennzeichnet, dass** er ein dichtes äußeres Blatt (10) umfasst, das gegen die poröse Schicht (5) angeordnet ist, wobei das Blatt von Mikroperforationen (11) über der vorbestimmten Höhe (7) bedeckt ist, wobei die nicht perforierten Bereiche des Blatts Schutzbänder (6) bilden.

6. Schirm nach Anspruch 5, **dadurch gekennzeichnet, dass** das äußere Blatt (10) ein Film aus Plastikmaterial ist.

7. Schirm nach Anspruch 5, **dadurch gekennzeichnet, dass** das äußere Blatt (10) aus Aluminium ist.

8. Schirm nach einem der Ansprüche 1 bis 7, **dadurch gekennzeichnet, dass** er außerdem eine äußere poröse Schutzschicht (12) umfasst.

## Claims

1. Thermal and acoustic shield (1) for a motor vehicle exhaust line, said shield having a substantially rectilinear portion (13) in the form of an inverted gutter having two lateral sides (2) each delimited by a respective substantially linear bottom edge (3), said shield comprising, associated in a superposed manner, an inner thermal reflection sheet (4) made of aluminium and an acoustic absorption porous layer (5), said shield **characterised in that** it further comprises two outer side strips (6) to protect said porous layer against water, with each of said strips respectively covering each of said sides from its edge (3) until a predetermined height (7), with a middle zone (8) of said porous layer not covered by said strips.

2. Shield according to claim 1, **characterised in that** the height (7) has a minimum value of 50 mm.

3. Shield according to claim 1 or 2, **characterised in that** the strips (6) come from the inner sheet (4), said strips formed by two lateral protrusions (9) of said sheet that are folded against the porous layer (5).

4. Shield according to claim 1 or 2, **characterised in that** the complex comprising the inner sheet (4) and the porous layer (5) is folded upwards to form the sealing strips (6).

5. Shield according to claim 1 or 2, **characterised in that** it comprises a sealed outer sheet (10) associated against the porous layer (5), said sheet covered with micro perforations (11) above the predetermined height (7), with the non-perforated zones of said sheet forming protective strips (6).

6. Shield according to claim 5, **characterised in that** the outer sheet (10) is a plastic material film.

7. Shield according to claim 5, **characterised in that** the outer sheet (10) is made of aluminium.

8. Shield according to any of claims 1 to 7, **characterised in that** it further comprises a porous outer protective layer (12).
